# EUROPÄISCHE PATENTSCHRIFT

(11) **EP 1 619 015 B1**
(45) Veröffentlichungstag und Bekanntmachung des Hinweises auf die Patenterteilung: **08.10.2008**
(21) Anmeldenummer: 05011455.2
(22) Anmeldetag: 27.05.2005
(51) Int. Cl.: B31F 1/07

(54) **Mehrlagiges Flächenprodukt**
Multilayered sheet product
Produit en feuilles multicouche

(30) Priorität: 19.07.2004 DE 202004011289 U
(43) Veröffentlichungstag der Anmeldung: 25.01.2006
(73) Patentinhaber: SCA Hygiene Products GmbH, 68305 Mannheim (DE)
(72) Erfinder: Mauler, Dirk, Dr., 68549 Ilvesheim (DE); Marinoni, Sarah, 22070 Lorago Marinone (Como) (IT)
(74) Vertreter: HOFFMANN EITLE

(56) Entgegenhaltungen:
- WO-A-20/04057110
- GB-A- 2 255 745
- US-A1- 2004 028 935
- US-A1- 2004 062 916

## Beschreibung

Die Erfindung bezieht sich auf ein mehrlagiges Flächenprodukt aus Tissuepapier oder non-woven-Material, als Toilettenpapier, Küchenpapier, Serviette, Papiertaschentuch oder dergleichen, mit einer ein Muster bildenden Prägung, von der über die Prägenoppen mindestens eines Prägemusters mittels eines farbigen Klebstoffes eine Lagenhaftung zwischen den Lagen besteht, so dass zumindest auf der Vorderseite oder der Rückseite des Flächenproduktes das entsprechende Prägemuster farbig erscheint, wobei sich das Prägemuster kontrastmäßig von der Farbe der Lage an der Vorderseite bzw. Rückseite des Flächenproduktes abhebt.

Ein Tissuepapier ist definiert als ein weiches absorbierendes Papier mit einem niedrigen Flächengewicht. Im allgemeinen wird ein Flächengewicht von 8 bis 30 g/m², insbesondere 10 bis 25 g/m² pro Lage gewählt. Das gesamte Basisgewicht eines mehrlagigen Tissueprodukts beträgt vorzugsweise bis zu maximal 65 g/m², besonders bevorzugt bis maximal 50 g/m². Seine Dichte liegt typischerweise unterhalb von 0,6 g/cm³, vorzugsweise unterhalb von 0,30 g/cm³ und mehr bevorzugt zwischen 0,08 und 0,20 g/cm³.

Die Herstellung von Tissue unterscheidet sich von der Papierherstellung durch das extrem niedrige Flächengewicht und die viel höhere Zugzerreißarbeitskennzahl (siehe DIN EN 12625-4 und DIN EN 12625-5). Papier und Tissuepapier unterscheiden sich ferner im allgemeinen in Bezug auf den Elastizitätsmodul, der die Spannungsdehnungseigenschaften dieser planaren Produkte als Materialparameter charakterisiert.

Die hohe Zugzerreißarbeitskennzahl kommt vom äußeren oder inneren Kreppen des Tissues. Das erstgenannte Kreppen wird durch Kompression der Papierbahn an einem trockenen Zylinder als Folge der Wirkung eines Kreppschabers oder im Falle des letztgenannten Kreppen als eine Folge eines Geschwindigkeitsunterschiedes zwischen zwei Sieben ("Stoffen") durchgeführt. Dies verursacht, dass die noch immer feuchte, plastisch verformbare Papierbahn intern durch Kompression und Scheren aufgebrochen wird, wodurch sie unter Last dehnbarer wird als ein ungekrepptes Papier.

Feuchte Tissuepapierbahnen werden üblicherweise durch das sogenannte Yankee-Trocknen, das Durchlufttrocknen (TAD) oder das Impulstrockenverfahren getrocknet.

Die in dem Tissuepapier enthaltenen Fasern sind hauptsächlich Zellulosefasern, wie beispielsweise Faserstofffasern aus chemischem Faserstoff (z.B. Kraftsulfit und Sulfatzellstoffe), mechanischem Faserstoff (z.B. gemahlenem Holz), thermomechanischem Faserstoff, chemomechanischem Faserstoff und/oder chemo-thermomechanischem Fasterstoff (CTMP). Faserstoffe die aus sowohl aus Laubholz (Hartholz) und Nadelholz (Weichholz) gebildet sind können verwendet werden. Die Fasern können auch recycelte Fasern sein oder diese enthalten, die einen beliebigen Bestandteil oder alle Bestandteile der obigen Kategorie enthalten. Die Fasern können mit Zusatzstoffen - beispielsweise Füllmitteln, Weichmachern, wie beispielsweise quaternären Armoniumverbindungen und Bindemitteln, wie beispielsweise herkömmlichen Trockenverfestigungsmitteln oder Nassverfestigungsmitteln, die verwendet werden um das ursprüngliche Papierbilden zu erleichtern und zum Einstellen der Eigenschaften davon verwendet werden - behandelt werden. Das Tissuepapier kann auch andere Fasertypen, z.B. regenerierte Zellulosefasern oder Kunstfasern beinhalten, die z.B. die Festigkeit, die Absorptionsfähigkeit, die Glattheit oder Weichheit des Papiers erhöhen.

Tissuepapier kann auf viele Arten z.B. durch Prägen oder Laminieren zu einem Mehrlagenprodukt, durch Rollen oder Falten in das endgültige Tissueprodukt umgewandelt werden.

Der Begriff Flies (non-woven) (ISO 90/92, DIN EN 29092) wird für eine Vielzahl an Produkten verwendet, deren Eigenschaften zwischen denen von Papier (siehe DIN 6730, Mai 1996) und Karton (DIN 6730) einerseits und Textilien andererseits angeordnet sind. In Bezug auf Vlies wird eine Vielzahl extrem unterschiedlicher Herstellungsvorgänge verwendet, wie beispielsweise die air-laid und spunlaced Techniken sowie wet-laid Techniken. Vlies umfasst Faserfilz, Vliesstoffe und Endprodukte, die daraus gebildet sind. Vlies kann ebenso als textilähnliches Verbundmaterial bezeichnet werden, das einen flexiblen porösen Stoff bildet, der nicht durch die klassischen Verfahren des Webens von Kett- und Schussfäden oder durch Schleifenbildung hergestellt wird. Tatsächlich werden Vliese durch Verschlingen, kohäsives oder adhesives Verbinden der Fasern oder eine Kombination davon hergestellt. Das Vliesmaterial kann aus Naturfasern, wie beispielsweise Zellulose- oder Baumwollfasern gebildet sein, kann jedoch auch aus Kunstfasern wie beispielsweise Polyethylen (PE), Polypropylen (PP), Polyuhrethan (PU), Polyester, Nylon oder regenerierter Zellulose, oder einer Mischung unterschiedlicher Fasern bestehen. Die Fasern können z.B. in der Form von Endlosfasern aus vorgefertigten Fasern einer endlichen Länge bestehen, wie beispielsweise Kunstfasern, die an Ort und Stelle hergestellt werden, oder sie können in der Form von Kurzfasern vorliegen. Die Vliese gemäß der Erfindung können somit aus einer Mischung aus synthetischem Material und Zellulosefasern, z.B. natürlichen Pflanzenfasern (siehe ISO 9092, DIN EN 29092) bestehen.

Im Zusammenhang damit ist ein Toilettenpapier auf dem Markt, bei dem das Muster als Vogelfeder gestaltet ist. Ein solches Produkt kann zumindest als zweilagiges Produkt ausgebildet sein, obwohl natürlich auch mehr Lagen, beispielsweise drei oder vier Lagen vorgesehen sein können. Im Vergleich zum farbigen Klebstoff ist üblicherweise die Farbe der Papierlagen etwa weiß und die Farbe des Klebstoffes rosa.

Aus der US 2004/0028935 A1 ist ein mehrlagiges Flächenprodukt aus Tissue-Papier als Toilettenpapier, Küchenpapier, Serviette, Papiertaschentuch o.dgl. bekannt. Bei einem zweilagigen Flächenprodukt aus Tissue-Papier sind zwei geprägte Lagen vorhanden, die dadurch miteinander verbunden sind, dass die Lagenhaftung durch farbigen Klebstoff erzeugt wird, der auf den Prägenoppen aufgebracht wird. In den Prägevertiefungen zumindest einer Lage ist das Material bedruckt. Die Bedruckung kann auch auf einer Zwischenlage erfolgen. Durch diese Maßnahmen soll das Erscheinungsbild des Produktes verbessert werden, wozu zumindest eine äußere Lage transparent gestaltet ist, damit der farbige Klebstoff in Abwechselung mit dem Aufdruck nach außen in Erscheinung treten kann. Die mittlere Schicht und die äußeren Schichten können optional eine unterschiedliche Farbe haben als der Grundschatten, kann also eingefärbt sein.

Im Hinblick auf diesen Stand der Technik besteht die Aufgabe der vorliegenden Erfindung darin, eine Verbesserung dahingehend vorzunehmen, dass sich das farbige Prägemuster an zumindest einer Seite des Flächenproduktes stärker kontrastmäßig absetzt, als dies beim Stand der Technik der Fall ist. Dabei soll möglichst das Prägemuster nicht verändert werden müssen.

Diese Aufgabe wird erfindungsgemäß durch die Merkmale des Patentanspruchs gelöst.

Überraschenderweise ergibt sich bei der Einfärbung zumindest einer der Lagen eine kontrastmäßige Hervorhebung des durch den Klebstoff farbig erscheinenden Prägemusters. Außer dieser Einfärbung der Lage bzw. Lagen bedarf es keiner weiteren Investition, um diesen Effekt zu erzielen.

Der Effekt verstärkt sich noch, wenn die Lageneinfärbung in etwa in der gleichen Farbe erfolgt wie der farbige Klebstoff.

Die Erfindung wird nachfolgend anhand von in den Zeichnungen rein schematisch dargestellten Ausführungsbeispielen näher erläutert. Es zeigen:
- Fig. 1: eine Draufsicht auf ein Flächenprodukt wie ein Toilettenpapier,
- Fig. 2: eine vergrößerte Schnittansicht durch das Produkt entlang der Linie II; II in Fig. 2
- Fig. 3: die schematische Darstellung eines vierlagigen Produktes,
- Fig. 4: die Darstellung des vierlagigen Produktes mit der räumlichen Trennung der beiden Lagen der Vorderseite und der beiden Lagen der Rückseite zusammen mit der perspektivischen Darstellung einer Musterprägewalze,
- Fig.5a+5b: die Darstellung des Prägevorganges durch die Musterprägewalze sowie die Darstellung der Aufbringung des farbigen Klebstoffs und
- Fig. 6: eine Darstellung des Zusammenbringens der Lagen über eine sogenannte "marrying roll" (Zusammenbringwalze).

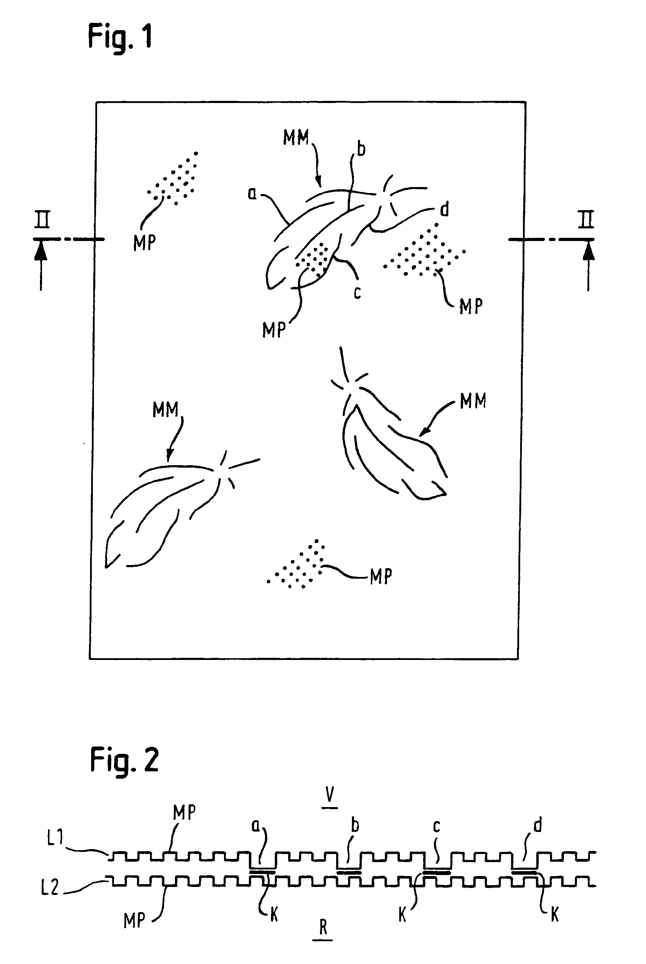

Aus Fig. 1 ist ein Blatt eines Toilettenpapiers erkennbar, welches hier gemäß Fig. 2 z.B. aus zwei Lagen L1 und L2 besteht. In die Lagen ist beispielsweise ein Mikroprägemuster MP eingeprägt, welches in Fig. 1 teilweise auf der Oberfläche dargestellt ist, eigentlich aber die gesamte Oberfläche auch im Bereich des Makromusters MM vorhanden ist. Das Makromuster ist hier beispielsweise in Form einer Vogelfeder ausgebildet. Die entsprechenden Einprägungen a), b), c) und d) sind aus Fig. 2 mit den entsprechenden Bezeichnungen erkennbar.

Beide Lagen sind durch Lagenhaftung miteinander verbunden. Hier besteht diese Lagenhaftung durch Klebstoff K (Fig. 2). Dieser Klebstoff ist beispielsweise rosa oder in einer anderen Farbe eingefärbt, so dass das Makromuster MM in Form einer Feder bevorzugt von der Vorderseite V, gegebenenfalls aber auch auf der Rückseite R sichtbar ist. Bevorzugt ist in der selben oder einer ähnlichen Farbe die Lage L2 oder die Lage L1 eingefärbt, was ein stärkeres kontrastmäßiges Hervorheben des rosa durchscheinenden Markomusters MM bewirkt.

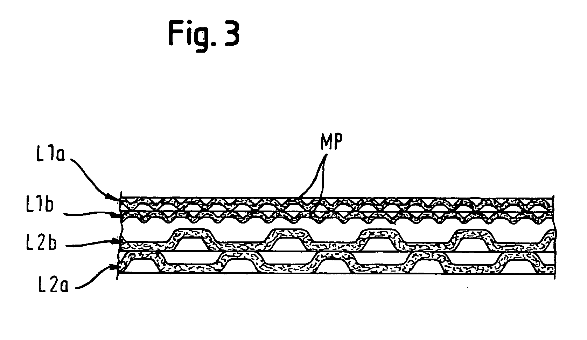

In Fig. 3 ist ein vierlagiges Produkt dargestellt. Hier sind beispielsweise die beiden Lagen L1a und L1b mit einem Mirkoprägemuster MP versehen. Die Lagen L2a und L2b sind hier als ein Makroprägemuster vorgesehen, was allerdings nicht zu verwechseln ist mit dem Makromuster MM in Form einer Feder. Allerdings kann auch in den Lagen L2a und L2b ein Mirkoprägemuster vorgesehen sein. Üblicherweise erfolgt das Prägen dieser Muster zwischen gesonderten Prägewalzen.

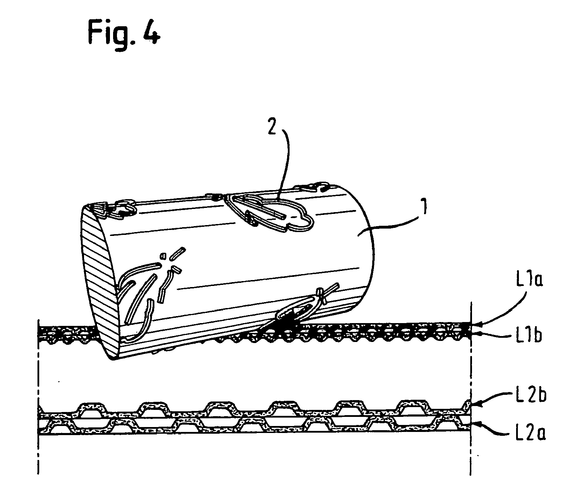

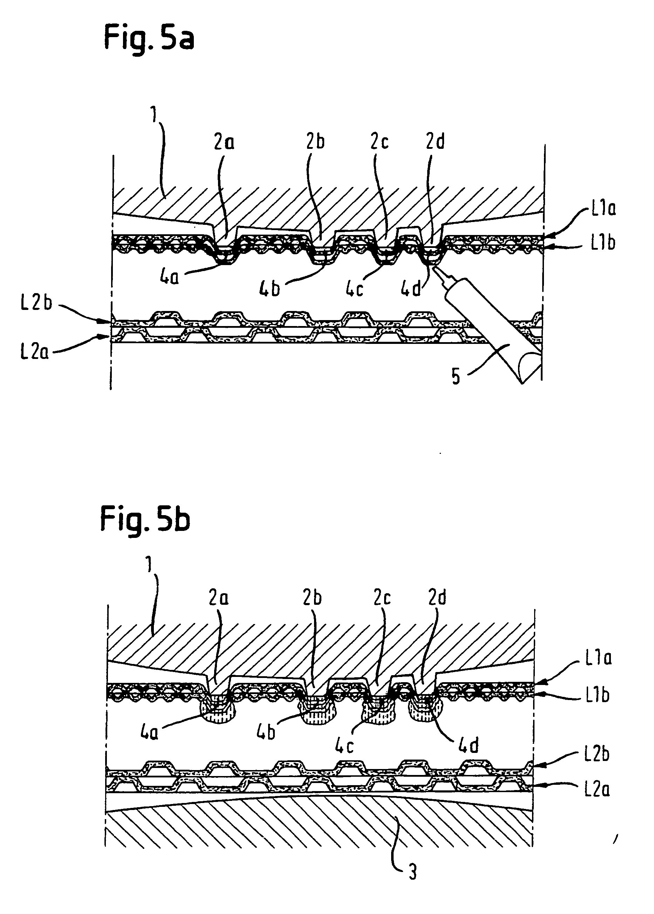

Fig. 4 ist der Lagenaufbau der Fig. 3 zu entnehmen zusammen mit einer Prägewalze 1, auf der die Prägenoppen 2 in Gestalt der Vogelfeder vorgesehen sind. Die Prägewalze 1 ist auch Fig. 5a und Fig. 5b zu entnehmen. Vergleichbar mit der Darstellung in Fig. 1 sind hier auch Prägenoppen 2a, 2b, 2c und 2d erkennbar. Aus Fig. 5b ist auch eine Gegenwalze 3 entnehmbar. Aus Fig. 5a und 5b ist des Weiteren ersichtlich, wie die Prägenoppen Prägevertiefungen in den Lagen L1a und L1b prägen. Auf diese Einprägungen wird der farbige Klebstoff aufgebracht, was in Fig. 5a durch die schematisch dargestellte Tube 5 dargestellt ist.

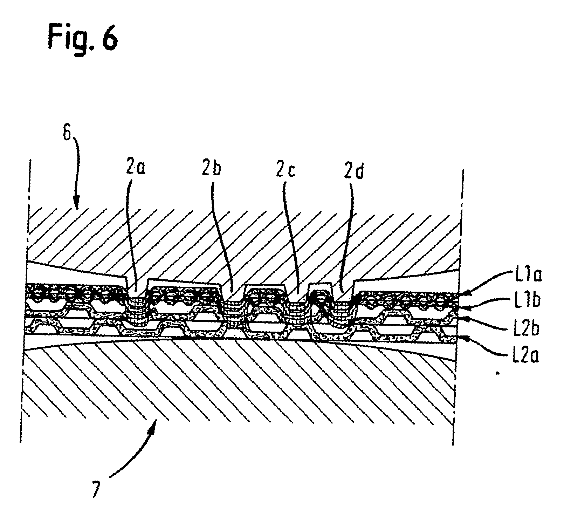

Entsprechend der Darstellung in Fig. 6 werden nach dem Aufbringen des farbigen Klebstoffes die Lagen L1a, L1b und L2a, L2b durch eine sogenannte "marrying roll" (Zusammenbringwalze) 6 zusammengebracht, und zwar gegen eine Gegenwalze 7, wobei die Walze 6 ebenfalls die Musterprägenoppen 2a, 2b, 2c und 2d prägt, wobei der Ablauf so ausgerichtet ist, dass diese Prägenoppen genau mit den eingeprägten Vertiefungen 4a, 4b, 4c und 4d zusammenfallen.

Bevorzugt ist entweder die Lage L1a oder die Lage L2a eingefärbt und die entsprechende andere Lage sowie die übrigen Lagen bestehen aus weißem Tissuematerial.

## Patentansprüche

1. Mehrlagiges Flächenprodukt aus Tissuepapier oder non-woven-Material, als Toilettenpapier, Küchenpapier, Serviette, Papiertaschentuch oder dergleichen, mit einer ein Muster bildenden Prägung, von der über Prägenoppen mindestens eines Prägemusters mittels eines farbigen Klebstoffes eine Lagenhaftung zwischen den Lagen besteht, so dass zumindest auf der Vorderseite oder der Rückseite des Flächenproduktes das entsprechende Prägemuster farbig erscheint, wobei sich das Prägemuster kontrastmäßig von der Farbe der Lage an der Vorderseite bzw. Rückseite des Flächenproduktes abhebt, und wobei das Material zumindest einer Lage (L1; L2) an der Rückseite oder Vorderseite des Flächenproduktes eingefärbt ist, **dadurch gekennzeichnet, dass** zumindest eine Lage (L1; L2)an der Rückseite bzw. Vorderseite des Flächenproduktes zur Kontrastverstärkung des farbigen Prägemusters gegenüber der die Vorderseite bzw. Rückseite des Flächenproduktes bildenden Lage ähnlich oder gleich eingefärbt ist wie der die Lagenhaftung vornehmende Klebstoff (K).

## Claims

1. Multi-layered sheet product made from tissue paper or non-woven material, as toilet paper, kitchen paper, serviette, paper handkerchief or the like, having embossing forming a pattern, from which via embossing burls of at least one embossing pattern by means of a coloured adhesive, layer adhesion exists between the layers, so that at least on the front side or the rear side of the sheet product, the corresponding embossing pattern appears coloured, wherein the embossing pattern stands out in terms of contrast from the colour of the layer on the front side or rear side of the sheet product, and wherein the material of at least one layer (L1; L2) is coloured on the rear side or front side of the sheet product, **characterised in that** at least one layer (L1; L2) on the rear side or front side of the sheet product for contrast enhancement of the coloured embossing pattern with respect to the layer forming the front side or rear side of the sheet product is coloured similar to or the same as the adhesive (K) carrying out layer adhesion.

## Revendications

1. Produit plat multicouche, constitué d'un papier de soie ou d'un matériau non tissé, tel que du papier hygiénique, du papier cuisine, du papier serviette, du papier mouchoir ou similaire, présentant une empreinte qui figure un motif avec, sur des nopes d'au moins un motif, création par l'intermédiaire d'un adhésif coloré, d'une adhérence des couches entre elles de sorte qu'au moins sur la face avant ou sur la face arrière du produit plat, apparaît en couleur le motif de l'empreinte correspondant, et que ce motif se détache par un contraste de couleur, de la couche située sur la face avant ou arrière du produit plat, le matériau d'au moins une couche (L1 ; L2) située sur la face arrière ou sur la face avant du produit plat étant coloré, ce produit étant **caractérisé en ce que** pour renforcer le contraste que présente le motif coloré de l'empreinte par rapport à la couche qui constitue la face avant ou la face arrière du produit plat, au moins une couche (L1 ; L2) sur la face arrière ou sur la face avant du produit plat, présente une coloration identique ou similaire à celle que présente l'adhésif (K) assurant l'adhésion des couches entre elles.
